# EUROPEAN PATENT SPECIFICATION

(11) **EP 2 001 966 B1**
(45) Date of publication and mention of the grant of the patent: **16.05.2012**
(21) Application number: 07759766.4
(22) Date of filing: 30.03.2007
(51) Int. Cl.: C09D 183/04, C08J 7/00

(54) **ABRASION RESISTANT COATING COMPOSITIONS AND COATED ARTICLES**
ABRIEBFESTE BESCHICHTUNGSZUSAMMENSETZUNGEN UND BESCHICHTETE ARTIKEL
COMPOSITIONS DE REVETEMENT RESISTANTES A L'ABRASION ET ARTICLES ENDUITS

(30) Priority: 06.04.2006 US 789779 P; 29.03.2007 US 693372
(43) Date of publication of application: 17.12.2008
(73) Proprietor: PPG Industries Ohio, Inc., Cleveland, OH 44111 (US)
(72) Inventor: COLTON, James P., Trafford, Pennsylvania 15085 (US); CHENG, Shan, Sewickley, PA 15143 (US)
(74) Representative: Polypatent
(86) International application number: PCT/US2007/065575
(87) International publication number: WO 2007/118024

(56) References cited:
- EP-A- 0 389 927
- EP-A- 0 581 542
- EP-A- 1 355 381
- DE-A1- 19 615 489
- GB-A- 2 123 842
- US-A- 4 069 368

## Description

### FIELD OF THE INVENTION

The present invention relates to abrasion resistant coating compositions. More particularly, the present invention relates to abrasion resistant curable coating compositions that include a sol comprising an alkoxide of the general formula RₓM(OR')_{z-x} and one or more cationic cure catalysts. The coating compositions can exhibit good adhesion to organic substrates without the use of a primer.

### BACKGROUND INFORMATION

Plastic substrates, including transparent plastic substrates, are desired for a number of applications, such as optical elements such as windows and windshields, plano and vision correcting ophthalmic lenses, exterior viewing surfaces of liquid crystal displays, cathode ray tubes, e.g., video display tubes for televisions and computers, clear polymeric films, aircraft transparencies, and consumer electronics, among other things. To minimize scratching, as well as other forms of degradation, clear "hard coats" are often applied as protective layers to the substrates. A primer is often used to enhance adhesion between the hardcoat and the substrate. Hard coats that adhere to these substrates without the use of a primer, while maintaining their abrasion resistance properties, are desired. In addition, hard coats that are rapidly curable upon exposure to actinic radiation are also desired for, among other reasons, productivity.

### SUMMARY OF THE INVENTION

In certain respects, the present invention is directed to coating compositions comprising an alkoxide of the general formula RₓM(OR')_{z-x} where R is an organic radical, M is silicon, aluminum, titanium, and/or zirconium, each R' is independently an alkyl radical, z is the valence of M, and x is a number less than z and may be zero, wherein the coating composition is cationically curable.

In other respects, the present invention is directed to an article at least partially coated with a hard coat. The hard coat is deposited from a coating composition comprising an alkoxide of the general formula RₓM(OR')_{z-x} where R is an organic radical, M is silicon, aluminum, titanium, and/or zirconium, each R' is independently an alkyl radical, z is the valence of M, and x is a number less than z and may be zero, wherein the coating composition is cationically curable.

In yet other respects, the present invention is directed to methods for depositing a hard coat on at least a portion of a plastic substrate. These methods comprise: (a) at least partially hydrolyzing an alkoxide of the general formula RₓM(OR')_{z-x} where R is an organic radical, M is silicon, aluminum, titanium, and/or zirconium, each R' is independently an alkyl radical, z is the valence of M, and x is a number less than z and may be zero; (b) depositing the coating composition on at least a portion of the substrate; and (c) curing the coating composition to form a hard coat on at least a portion of the substrate, wherein the coating composition is cationically curable.

In still other respects, the present invention is directed to methods for improving the abrasion resistance of a substrate by applying the coating composition to at least a portion of the substrate surface.

### DETAILED DESCRIPTION OF EMBODIMENTS OF THE INVENTION

For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. For example, and without limitation, this application refers to coating compositions that comprise "an alkoxide." Such references to "an alkoxide" is meant to encompass coating compositions comprising one alkoxide as well as coating compositions that comprise a mixture of two or more different alkoxides. In addition, in this application, the use of "or" means "and/or" unless specifically stated otherwise, even though "and/or" may be explicitly used in certain instances.

As indicated, certain embodiments of the present invention are directed to coating compositions, such as coating compositions suitable for producing a hard coat. As used herein, the term "hard coat" refers to a coating, such as a clear coat, that offers one or more of chip resistance, impact resistance, abrasion resistance, UV degradation resistance, humidity resistance, and/or chemical resistance.

In certain embodiments, the coating compositions of the present invention comprise an alkoxide of the general formula RₓM(OR')_{z-x} where R is an organic radical, M is silicon, aluminum, titanium, and/or zirconium, each R' is independently an alkyl radical, z is the valence of M, and x is a number less than z and may be zero and wherein the alkoxide comprises a glycidoxy [(C₁-C₃)alkyl]tri(C₁-C₄)alkoxysilane monomer and a tetra(C₁-C₆)alkoxysilane monomer. Examples of suitable organic radicals include, but are not limited to, alkyl, vinyl, methoxyalkyl, phenyl, γ-glycidoxy propyl and γ-methacryloxy propyl. The alkoxide can be further mixed and/or reacted with other compounds and/or polymers known in the art. Particularly suitable are compositions comprising siloxanes formed from at least partially hydrolyzing an organoalkoxysilane, such as one within the formula above. Examples of suitable alkoxide-containing compounds and methods for making them are described in U.S. Patent Nos. 6,355,189; 6,264,859; 6,469,119; 6,180,248; 5,916,686; 5,401,579; 4,799,963; 5,344,712; 4,731,264; 4,753,827; 4,754,012; 4,814,017; 5,115,023; 5,035,745; 5,231,156; 5,199,979; and 6,106,605, all of which are incorporated by reference herein.

In certain embodiments, the alkoxide comprises a glycidoxy[(C₁-C₃)alkyl]tri(C₁-C₄)alkoxysilane monomer and a tetra(C₁-C₆)alkoxysilane monomer. Glycidoxy[(C₁-C₃)alkyl]tri(C₁-C₄)alkoxysilane monomers suitable for use in the coating compositions of the present invention include glycidoxymethyltriethoxysilane, α-glycidoxyethyltrimethoxysilane, α-glycidoxyethyl-triethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyl-triethoxysilane, γ-glycidoxypropyltrimethoxysilane, hydrolysates thereof, or mixtures of such silane monomers.

Suitable tetra(C₁-C₆)alkoxysilanes that may be used in combination with the glycidoxy[(C₁-C₃)alkyl]tri(C₁-C₄)alkoxysilane in the coating compositions of the present invention include, for example, materials such as tetramethoxysilane, tetraethoxysilane, tetrapropoxysilane, tetrabutoxysilane, tetrapentyloxysilane, tetrahexyloxysilane and mixtures thereof.

In certain embodiments, the glycidoxy[(C₁-C₃)alkyl]tri(C₁-C₄)alkoxysilane and tetra(C₁-C₆)alkoxysilane monomers used in the coating composition of the present invention are present in a weight ratio of glycidoxy [(C₁-C₃)alkyl]tri(C₁-C₄)alkoxysilane to tetra(C₁-C₆)alkoxysilane of from 0.5:1 to 100:1, such as 0.75:1 to 50:1 and, in some cases, from 1:1 to 5:1.

In certain embodiments, the alkoxide (or combination of two or more thereof described above) is present in the coating composition in an amount of 5 to 75 percent by weight, such as 10 to 70 percent by weight, or, in some cases, 20 to 65 percent by weight, or, in yet other cases, 25 to 60 percent by weight, with the weight percent being based on the total weight of the composition.

In certain embodiments, the coating compositions of the present invention comprise a silica sol comprising silica nanoparticles and a polymerizable (meth)acrylate binding agent. As used herein, the term "silica sol" refers to a colloidal dispersion of finely divided silica particles dispersed in a binding agent, which, in the present invention comprises an polymerizable (meth)acrylate. As used herein, the term "silica" refers to SiO₂. As used herein, the term "nanoparticles" refers to particles that have an average primary particle size of less than 1 micron.
In certain embodiments, the nanoparticles used in the present invention have an average primary particle size of 300 nanometers or less, such as 200 nanometers or less, or, in some cases, 100 nanometers or less, or, in yet other cases, 50 nanometers or less, or, in some cases, 20 nanometers or less.

For purposes of the present invention, average particle size can be measured according to known laser scattering techniques. For example, average particle size can be determined using a Horiba Model LA 900 laser diffraction particle size instrument, which uses a helium-neon laser with a wave length of 633 nm to measure the size of the particles and assumes the particle has a spherical shape, i.e., the "particle size" refers to the smallest sphere that will completely enclose the particle. Average particle size can also be determined by visually examining an electron micrograph of a transmission electron microscopy ("TEM") image of a representative sample of the particles, measuring the diameter of the particles in the image, and calculating the average primary particle size of the measured particles based on magnification of the TEM image. One of ordinary skill in the art will understand how to prepare such a TEM image and determine the primary particle size based on the magnification. The primary particle size of a particle refers to the smallest diameter sphere that will completely enclose the particle. As used herein, the term "primary particle size" refers to the size of an individual particle, as opposed to an agglomeration of particles.

As indicated, the silica sol comprises a polymerizable (meth)acrylate binding agent. As used herein, the term "(meth)acrylate" is meant to include both acrylate and methacrylate. Polymerizable (meth)acrylates suitable for use as a binding agent in the silica sols present in the coating compositions of the present invention include unsaturated (meth)acrylate monomers and oligomers, such as, for example, mono-, di-, tri-, tetra-, and penta-(meth)acrylates. Non-limiting specific examples of such materials include hydroxyethylmethacrylate, trimethylolpropaneformalacrylate, hexanedioldiacrylate, tripropyleneglycoldiacrylate, neopentylglycoldiacrylate, trimethylolpropanetriacrylate, glycerintriacrylate, and/or pentaerythritoltetraacrylate, among others. Silica sols suitable for use in the present invention are commercially available. Examples include the Nanocryl® line of products available from Hanse chemie AG, Geesthacht, Germany. These products are low viscosity sols having a silica content of up to 50 percent by weight.

In an embodiment of the present invention, the coating composition may further comprise a polyepoxy compound, that is, a compound having two or more epoxy groups. Such compounds can include, for example, a polyglycidyl ether group-containing compound and/or a polyglycidyl ester group-containing compound. The polyglycidyl ether compound may be prepared by the reaction of epichlorohydrin with a polyfunctional phenol such as bisphenol A or a polyfunctional aliphatic or alicyclic alcohol having 15 carbon atoms or less to produce diglycidyl ethers of bifunctional phenols, diglycidyl ethers of bifunctional alcohols, diglycidyl ethers of trifunctional alcohols, triglycidyl ethers of trifunctional alcohols, etc. Examples of such polyfunctional aliphatic and alicyclic alcohols can include polyethylene glycol, polypropylene glycol, neopentylglycol, glycerol, diglycerol, erythritol, pentaerythritol, dipentaerythritol, trimethylolethane, trimethylolpropane, sorbitol, mannitol, butanediol, hexanediol, 1,4-dihydroxymethylcyclohexane and 2,2-di(4-hydroxycyclohexyl)propane.

The polyglycidyl ester compound may be prepared by the reaction of epichlorohydrin with polyfunctional aliphatic or alicyclic carboxylic acids having 8 carbons or less to produce diglycidyl esters of dicarboxylic acids. Examples of such carboxylic acids include succinic acid, glutaric acid, adipic acid, tetrahydrophthalic acid, hexahydrophthalic acid and hexahydroterephthalic acid.

The polyepoxy compound used in the coating composition may be a single polyglycidyl ether group-containing compound, a mixture of polyglycidyl ether group-containing compounds, a single polyglycidyl ester group-containing compound, a mixture of polyglycidyl ester group-containing compounds or a mixture of polyglycidyl ether group-containing compounds and polyglycidyl ester group-containing compounds. In a particular embodiment of the present invention, the polyepoxy compound comprises diglycidyl ethers of polyethylene glycol, polypropylene glycol, neopentylglycol, glycerol, trimethylolpropane, and/or bisphenol A. Such materials may be synthesized by the reaction of epichlorohydrin with the polyfunctional alcohols or phenols as described in U.S. Patent 4,211,323, which disclosure is incorporated herein by reference.

In some embodiments of the present invention, the polyepoxy compound may be present in the coating composition to enhance tintability of the coating. In such embodiments, the amount of polyepoxy compound that may be present in the coating composition of the present invention is a tintable amount. A tintable amount is defined herein to be the amount of polyepoxy compound necessary to add to the coating composition so that a cured coating demonstrates a reduction of at least 50 percent in transmission after being tinted for one hour in the Tintability Test as described herein below.

For purposes of the present invention, the "Tintability Test" as used herein is a method for determining the dyeability characteristics of coatings applied to a substrate. Generally, the initial percent transmission of coated substrate samples is measured using a Hunterlab Colorimeter and recorded. Then the coated samples are immersed in a dye bath of an aqueous solution of 10% black dye (commercially available from BPI(BrainPower, Inc.) at a temperature ranging from 197ºF to 202ºF (90ºC to 95ºC). The samples are immersed for a prescribed period at this temperature, then washed and rinsed until free of dye residue. The samples are dried and final percent transmission is measured.

In a particular embodiment of the invention, the tintable amount of polyepoxy compound can cause a reduction to at least 40 percent transmission after 30 minutes, such as a reduction to at least 30 percent transmission after 20 minutes, or a reduction to at least 20 percent transmission after 20 minutes of tinting in the Tintability Test. The amount of polyepoxy compound may range from 9 to 50 weight percent, such as from 12 to 40 weight percent, or from 15 to 30 weight percent where weight percentages are based on total weight of resin solids present in the composition, or the amount of polyepoxy compound may range between any combination of these values, inclusive of the recited ranges.

In certain embodiments, the coating composition may further comprise an organic solvent. The organic solvents present in the coating composition of the present invention may be added or formed *in situ* by the hydrolysis of the silanes as mentioned below. Suitable organic solvents are those that will dissolve or disperse the solid components of the coating composition. The minimum amount of solvent present in the coating composition is a solvating amount, i.e., an amount which is sufficient to solubilize or disperse the solid components in the coating composition. Suitable solvents include, but are not limited to, the following: benzene, toluene, methyl ethyl ketone, methyl isobutyl ketone, acetone, ethanol, tetrahydrofurfuryl alcohol, propyl alcohol, propylene carbonate, N-methylpyrrolidinone, N-vinylpyrrolidinone, N-acetylpyrrolidinone, N-hydroxymethylpyrrolidinone, N-butyl-pyrrolidinone, N-ethylpyrrolidinone, N-(N-octyl)-pyrrolidinone, N-(n-dodecyl)pyrrolidinone, 2-methoxyethyl ether, xylene, cyclohexane, 3-methylcyclohexanone, ethyl acetate, butyl acetate, tetrahydrofuran, methanol, amyl propionate, methyl propionate, diethylene glycol monobutyl ether, dimethyl sulfoxide, dimethyl formamide, ethylene glycol, mono- and dialkyl ethers of ethylene glycol and their derivatives, which are sold as CELLOSOLVE industrial solvents by Union Carbide, propylene glycol methyl ether and propylene glycol methyl ether acetate, which are sold as DOWANOL® PM and PMA solvents, respectively, by Dow Chemical and mixtures of such recited solvents

In certain embodiments, the alkoxide can be at least partially hydrolyzed before combination withother composition components. Such an hydrolysis reaction is described in United States Patent No. 6,355,189 at col. 3, lines 7 to 28, the cited portion of which being incorporated by reference herein.

In certain embodiments, water is provided in an amount necessary for the hydrolysis of the hydrolyzable alkoxide(s). For example, in certain embodiments, water is present in an amount of at least 1.5 moles of water per mole of hydrolyzable alkoxide. In certain embodiments, atmospheric moisture, if sufficient, can be adequate. In other embodiments, a hydrolysis catalyst can be present to catalyze the hydrolysis and condensation reaction. Non-limiting examples of suitable hydrolysis catalysts can include acidic materials such as an organic acid, inorganic acid or mixtures thereof. Non-limiting examples of such materials include acetic, formic, glutaric, maleic, nitric, hydrochloric, phosphoric, hydrofluoric, sulfuric acid or mixtures thereof.

Any material that generates an acid upon exposure to actinic radiation and/or thermal energy can be used as a hydrolysis and condensation catalyst in the coating compositions of the present invention, such as a Lewis acid and/or a Bronsted acid. Non-limiting examples of acid generating compounds include onium salts and iodosyl salts, aromatic diazonium salts, metallocenium salts, o-nitrobenzaldehyde, the polyoxymethylene polymers described in United States Patent No. 3,991,033, the o-nitrocarbinol esters described in United States Patent No. 3,849,137, the o-nitrophenyl acetals, their polyesters and end-capped derivatives described in United States Patent No. 4,086,210, sulphonate esters or aromatic alcohols containing a carbonyl group in a position alpha or beta to the sulphonate ester group, N-sulphonyloxy derivatives of an aromatic amide or imide, aromatic oxime sulphonates, quinone diazides, and resins containing benzoin groups in the chain, such as those described in United States Patent No. 4,368,253. Examples of these radiation activated acid catalysts are also disclosed in United States Patent No. 5,451,345. In certain embodiments, the acid generating compound useful as a hydrolysis and condensation catalyst comprises a cationic photoinitiator, such as an onium salt. Non-limiting examples of such materials include diaryliodonium salts and triarylsulfonium salts, which are commerically available as SarCat® CD-1012 and CD-1011 from Sartomer Company. Other suitable onium salts are described in United States Patent No. 5,639,802, column 8, line 59 to column 10, line 46. Examples of such onium salts include 4,4'-dimethyldiphenyliodonium tetrafluoroborate, phenyl-4-octyloxyphenyl phenyliodonium hexafluoroantimonate, dodecyldiphenyl iodonium hexafluoroantimonate, [4-[(2-tetradecanol)oxy]phenyl]phenyl iodonium hexafluoroantimonate and mixtures thereof.

The amount of hydrolysis and condensation catalyst used in the coating compositions of the present invention can vary widely and depend on the particular materials used. Only the amount required to catalyze and/or initiate the hydrolysis and condensation reaction is required, e.g., a catalyzing amount. In certain embodiments, the acidic material and/or acid generating material can be used in an amount from 0.01 to 5 percent by weight, based on the total weight of the composition.

As previously mentioned, the coating composition of the present invention is cationically curable. That is, the composition is cured via a cationic curing or polymerization mechanism through the inclusion of a cationic cure catalyst. Suitable cure catalysts can include, for example, any of the cationic photoinitiators described above, where curing with actinic radiation is desired, or latent acid catalysts, for example, where curing upon exposure to thermal energy is desired. Examples of suitable latent acid catalysts can include any of a variety of salts provided the cation at least partially volatilizes upon heating thereby generating an acid. Specific examples include, but are not limited to ammonium hexafluoroantimonate, quaternary salts of SbF₆ (e.g., NACURE^{®} XC-7231), t-amine salts of SbF₆ (e.g., NACURE^{®} XC-9223), Zn salts of friflic acid (e.g., NACURE^{®} A202 and A218), quaternary salts of triflic acid (e.g., NACURE^{®} XC-A230), and diethylamine salts of triflic acid (e.g., NACURE^{®} A233), all commercially available from King Industries, and/or mixtures thereof. Where dual cure conditions, using both actinic radiation and thermal cure, are desired, both types of the aforementioned cure catalysts may be included in the coating compositions of the present invention.

The coating compositions of the present invention can also include one or more standard additives as are well known in the art, such as flow additives, rheology modifiers, surfactants, adhesion promoters, and the like. In certain embodiments, the coating compositions of the present invention comprise a UV absorber.

In certain embodiments, the coating compositions of the present invention comprise an organosiloxane polyol of the type described in United States Patent Application Serial No. 11/116,552 at [0004] to [0007], the cited portion of which being incorporated herein by reference. Such a material, if used, is often present in the coating composition in an amount of 1 to 25 weight percent, such as 2 to 15 or 5 to 10 weight percent, based on the total solid weight of the coating composition.

In certain embodiments, the coating compositions of the present invention are substantially free of, or, in some cases, completely free of any free radically polymerizable material. Examples of such materials are mono-, di-, tri-, tetra- or pentafunctional monomeric or oligomeric aliphatic, cycloaliphatic or aromatic (meth)acrylates. As used herein, the term "substantially free" means that the material being discussed is present in the composition, if at all, as an incidental impurity. In other words, the material does not affect the properties of the composition. As used herein, the term "completely free" means that the material is not present in the composition at all.

In certain embodiments, the coating compositions of the present invention are substantially free of, or, in some cases, completely free of any free radical polymerization initiators. Such materials include any compound that forms free radicals upon exposure to actinic radiation. Specific examples of such materials, which, in certain embodiments, are substantially or completely absent from the coating compositions of the present invention, are benzoins, benzil, benzil ketals, anthraquinones, thioxanthones, xanthones, acridine derivatives, phenazene derivatives, quinoxaline derivatives, 1-phenyl-1,2-propanedione-2-O-benzoyloxime, 1-aminophenyl ketones, 1-hydroxyphenyl ketones, and triazine compounds. Other free radical polymerization initiators, which, in certain embodiments, are substantially or completely absent from the coating compositions of the present invention are acetophenones, benzil ketals and benzoylphosphine oxides. Another class of free radical polymerization initiators, which, in certain embodiments, are substantially or completely absent from the coating compositions of the present invention are the ionic dye-counter ion compounds, which are capable of absorbing actinic rays and producing free radicals, such as the materials described in published European-patent application EP 223587 and United States Patent Nos. 4,751,102; 4,772,530 and 4,772,541. As a result, certain embodiments of the present invention include no more than 1 percent by weight, or, in some cases, no more than 0.5 percent by weight, or, in yet other cases, no more than 0.1 percent by weight of free radical polymerization initiator, with weight percents being based on the total weight of the coating composition.

The coating compositions of the present invention can be prepared by any suitable method and the Examples herein illustrate one such method. For example, the coating compositions can be prepared by at least partially hydrolyzing the alkoxide described above and then adding the silica sol to the at least partially hydrolyzed material. The coating compositions of the present invention can be applied to any suitable substrate, however, in many cases, the substrate is a plastic substrate, such as thermoplastic substrate, for example, a polymeric organic material.

Examples of polymeric organic materials which may be used as substrates for the coating composition of the present invention include: polymers, i.e., homopolymers and copolymers, of the bis(allyl carbonate) monomers, diethylene glycol dimethacrylate monomers, diisopropenyl benzene monomers, ethoxylated bisphenol A dimethacrylate monomers, ethylene glycol bismethacrylate monomers, poly(ethylene glycol) bismethacrylate monomers, ethoxylated phenol bismethacrylate monomers, alkoxylated polyhydric alcohol acrylate monomers, such as ethoxylated trimethylol propane triacrylate monomers, urethane acrylate monomers, such as those described in U.S. Patent 5,373,033, and vinylbenzene monomers, such as those described in U.S. Patent 5,475,074 and styrene; polymers, i.e., homopolymers and copolymers, of mono-functional (meth)acrylate monomers, polyfunctional, e.g., di- or multi-functional, acrylate and/or methacrylate monomers, poly(C₁-C₁₂ alkyl methacrylates), such as poly(methyl methacrylate), poly(oxyalkylene)dimethacrylate, poly(alkoxylated phenol methacrylates), cellulose acetate, cellulose triacetate, cellulose acetate propionate, cellulose acetate butyrate, poly(vinyl acetate), poly(vinyl alcohol), poly(vinyl chloride), poly(vinylidene chloride), polyurethanes, polythiourethanes, thermoplastic polycarbonates, polyesters, poly(ethylene terephthalate), polystyrene, poly(alpha methylstyrene), copoly(styrene-methyl methacrylate), copoly(styrene-acrylonitrile), polyvinylbutyral and polymers, i.e., homopolymers and copolymers, of diallylidene pentaerythritol, particularly copolymers with polyol (allyl carbonate) monomers, e.g., diethylene glycol bis(allyl carbonate), acrylate monomers, e.g., ethyl acrylate, butyl acrylate and mixtures thereof. Further examples of polymeric organic materials are disclosed in the U.S. Patent 5,753,146, column 8, line 62 to column 10, line 34, which disclosure is incorporated herein by reference.

Transparent copolymers and blends of transparent polymers are also suitable as substrates. Preferably, the substrate for the coating composition is an optically clear polymerized organic material prepared from a thermoplastic polycarbonate resin, such as the carbonate-linked resin derived from bisphenol A and phosgene, which is sold under the trademark, LEXAN; a polyester, such as the material sold under the trademark, MYLAR; a poly(methyl methacrylate), such as the material sold under the trademark, PLEXIGLAS; polymerizates of a polyol(allyl carbonate) monomer, especially diethylene glycol bis(allyl carbonate), which monomer is sold under the trademark CR-39®, and polymerizates of copolymers of a polyol (allyl carbonate), e.g., diethylene glycol bis(allyl carbonate), with other copolymerizable monomeric materials, such as copolymers with vinyl acetate, e.g., copolymers of from 80-90 percent diethylene glycol bis(allyl carbonate) and 10-20 percent vinyl acetate, particularly 80-85 percent of the bis(allyl carbonate) and 15-20 percent vinyl acetate, and copolymers with a polyurethane having terminal diacrylate functionality, as described in U.S. Patents 4,360,653 and 4,994,208; and copolymers with aliphatic urethanes, the terminal portion of which contain allyl or acrylyl functional groups, as described in U.S. Patent 5,200,483; poly(vinyl acetate), polyvinylbutyral, polyurethane, polythiourethanes, polymers of members of the group consisting of diethylene glycol dimethacrylate monomers, diisopropenyl benzene monomers, ethoxylated bisphenol A dimethacrylate monomers, ethylene glycol bismethacrylate monomers, poly(ethylene glycol) bismethacrylate monomers, ethoxylated phenol bismethacrylate monomers and ethoxylated trimethylol propane triacrylate monomers; cellulose acetate, cellulose propionate, cellulose butyrate, cellulose acetate butyrate, polystyrene and copolymers of styrene with methyl methacrylate, vinyl acetate, acrylonitrile and mixtures thereof.

In a particular embodiment of the present invention, the substrate comprises polycarbonate, polyurethane, poly(urea)urethane, polythiourethane, polythio(urea)urethane, and/or polyol (allyl carbonate) materials. In a further embodiment of the present invention, the plastic substrate comprises a film, such as a cast film, comprising cellulose acetate, cellulose diacetate, cellulose triacetate, cellulose acetate propionate, cellulose acetate butyrate, poly(vinyl acetate), poly(vinyl alcohol), poly(vinyl chloride), poly(vinylidene chloride), poly(ethylene terephthalate), polyester, polyurethane, polythiourethane, polycarbonate, copolymers thereof, and/or mixtures thereof.

More particularly contemplated is use of the coating composition of the present invention with optically clear polymerizates, i.e., materials suitable for optical applications, such as, for example, lenses, i.e., plano and ophthalmic lenses, that are prepared from optical organic resin monomers. Optically clear polymerizates may have a refractive index ranging from 1.48 to 2.00, e.g., from 1.50 to 1.75 or from 1.55 to 1.66. In one contemplated embodiment, a tintable coating according to the present invention is applied to a polymeric organic material and imbibed with a colorant selected from static dyes, photochromic compounds or a mixture thereof as are described herein below. The polymeric organic material is in the shape of a lens.

As previously mentioned, tints or colorants may be incorporated into the cured coating of the present invention, provided the cured coating is "tintable", by various methods described in the art. Such methods include dissolving or dispersing the colorant within the surface of a substrate, e.g., imbibition of the colorant into the substrate by immersion of the substrate in a hot solution of the colorant, or by depositing the colorant on the surface of the substrate and thermally transferring the colorant into the substrate. The term "imbibition" or "imbibe" is intended to mean and include permeation of the colorant into the substrate, solvent assisted transfer absorption of the colorant into the substrate, vapor phase transfer and other such transfer mechanisms.

The tints or colorants that may be imbibed into the cured tintable coating of the present invention include static dyes, photochromic compounds or a mixture thereof. As used herein, the term static dyes are substantially free of color change upon exposure to ultraviolet light, i.e., non-photochromic dyes. The classes of static dyes that may be used, include, but are not limited to azo dyes, anthroquinone dyes, xanthene dyes, azime dyes and mixtures thereof. The static dyes and combination of static dyes are typically present in amounts sufficient to provide a desired color and percent transmission of visible light in a tinted cured coating, e.g., 15 percent transmittance as determined using the Hunter spectrophotometer in the Tintability Test. Tints may be imbibed into the tintable coating to reduce the percent transmission by from 1 or 2 percent up to 90 percent, including any number falling within this range.

Photochromic compounds exhibit a reversible change in color when exposed to radiation including ultraviolet rays, such as the ultraviolet radiation in sunlight or the light of a mercury lamp. The photochromic compounds used as colorants in the coating of the present invention may be used alone or in combination with one of more other appropriate complementary organic photochromic compounds, i.e., organic photochromic compounds having at least one activated absorption maxima within the range of 400 and 700 nanometers, and which color when activated to an appropriate hue.

The organic photochromic compounds may include naphthopyrans, e.g., naphtho[1,2-b]pyrans and naphtho[2,1-b]pyrans, quinopyrans, indenonaphthopyrans, oxazines, e.g., benzoxazines, naphthoxazines and spiro(indoline)pyridobenzoxazines, phenanthropyrans, e.g., substituted 2H-phenanthro[4,3-b]pyran and 3H-phenanthro[1,2-b]pyran compounds, benzopyrans, e.g., benzopyran compounds having substituents at the 2-position of the pyran ring, metal-dithiozonates; fulgides, fulgimides and mixtures of such photochromic compounds. The cured coatings of the present invention may be imbibed with one photochromic compound, a mixture of photochromic compounds, or a mixture of photochromic compounds and static dyes, as desired.
The amount of the photochromic compounds to be incorporated into the coating, is not critical provided that a sufficient amount is used to produce a photochromic effect discernible to the naked eye upon activation. Generally, such amount can be described as a photochromic amount. The particular amount used depends often upon the intensity of color desired upon irradiation thereof and upon the method used to incorporate the photochromic colorant. Typically, the more photochromic compound incorporated, the greater is the color intensity up to a certain limit. Methods for incorporating photochromic compounds into polymeric substrates have been disclosed in U.S Patents 4,286,957; 4,880,667; 5,789,015; and 5,975,696, which disclosure is incorporated herein by reference.

The relative amounts of the aforesaid photochromic compounds used will vary and depend in part upon the relative intensities of the color of the activated species of such compounds, the ultimate color desired and the method of application of the photochromic colorant to the coating. In a typical commercial imbibition process, the amount of total photochromic compound incorporated into a receptive coating may range from about 0.05 to about 2.0, e.g., from 0.2 to about 1.0, milligrams per square centimeter of surface to which the photochromic colorant is incorporated or applied.

Prior to applying the coating composition to such a substrate, the substrate surface may be treated by cleaning. Effective treatment techniques for plastics include ultrasonic cleaning; washing with an aqueous mixture of organic solvent, e.g., a 50:50 mixture of isopropanol:water or ethanol:water; UV treatment; activated gas treatment, e.g., treatment with low temperature plasma or corona discharge, and chemical treatment such as hydroxylation, i.e., etching of the surface with an aqueous solution of alkali, e.g., sodium hydroxide or potassium hydroxide, that may also contain a fluorosurfactant. See United States Patent No. 3,971,872, column 3, lines 13 to 25; United States Patent No. 4,904,525, column 6, lines 10 to 48; and United States Patent No. 5,104,692, column 13, lines 10 to 59, which describe surface treatments of polymeric organic materials, the cited portions of which are incorporated herein by reference.

The coating compositions of the present invention may be applied to the substrate using, for example, any conventional coating technique including flow coating, dip coating, spin coating, roll coating, curtain coating and spray coating. Application of the coating composition to the substrate may, if desired, be done in an environment that is substantially free of dust or contaminants, e.g., a clean room. Coatings prepared by the process of the present invention may range in thickness from 0.1 to 50 microns (µm), such as from 2 to 20 µm, and, in some cases, from 2 to 10 µm, e.g., 5 µm.

Following application of a coating composition of the present invention to the substrate, the coating is cured, such as by flashing the coating at ambient temperature for up to one hour, and then baking the coating at an appropriate temperature and time, which can be determined by one skilled in the art based upon the particular coating and/or substrate being used. As used herein, the terms "cured" and "curing" refer to the at least partial crosslinking of the components of the coating that are intended to be cured, i.e., cross-linked. In certain embodiments, the crosslink density, i.e., the degree of crosslinking, ranges from 35 to 100 percent of complete crosslinking. The presence and degree of crosslinking, i.e., the crosslink density, can be determined by a variety of methods, such as dynamic mechanical thermal analysis (DMTA) using a Polymer Laboratories MK III DMTA analyzer, as is described in United States Patent No. 6,803,408, at col. 7, line 66 to col. 8, line 18, the cited portion of which being incorporated herein by reference.

In certain embodiments, when a material that generates an acid on exposure to actinic radiation is present in a coating composition of the present invention, as described above, the coating composition may be at least partially cured by irradiating the coated substrate with a curing amount of ultraviolet light, either after thermally curing the coating, simultaneously during a thermal curing process, or in lieu of a thermal curing process. During the irradiation step, the coated substrate may be maintained at room temperature, e.g., 22°C, or it may be heated to an elevated temperature which is below the temperature at which damage to the substrate occurs.

Following application of the coating composition to the substrate surface, the coating is cured. For handling purposes, the coated substrate may be dried first and then cured. The coating may be dried at ambient temperatures or temperatures above ambient but below curing temperatures, e.g., up to 80ºC. Afterwards, the dried, coated surface is heated to a temperature of between 80ºC and 130ºC, e.g., 120ºC, for a period of from 30 minutes to 16 hours in order to cure the coating. While a range of temperatures has been provided for drying and curing the coating, it will be recognized by persons skilled in the art that temperatures other than those disclosed herein may be used. Additional methods for curing the coating include irradiating it with infrared, ultraviolet, visible or electron radiation.

When a photopolymerization initiator is present in the coating composition, a coated substrate may be irradiated with a curing amount of ultraviolet light, either after thermally curing the coating or simultaneously during the thermal curing process. During the irradiation step, the coated substrate may be maintained at room temperature, e.g., 22°C, or it may be heated to an elevated temperature which is below the temperature at which damage to the substrate occurs.

In certain embodiments of the present invention, it is contemplated that the coating composition of the present invention may be applied to one or more coating layers that have been previously applied to the substrate. Such previously applied coating layers can be deposited, for example, from photochromic coating compositions, other functional coatings such as polarizing coatings, anti-reflective coating compositions, transitional coating compositions, and/or additional protective coating compositions. Such coatings are known in the art.

Non-limiting examples of suitable photochromic coatings can include coatings comprising any of the photochromic materials that are discussed above. For example, although not limiting herein, the photochromic coatings can be photochromic polyurethane coatings, such as those described in U.S. Patent 6,187,444; photochromic aminoplast resin coatings, such as those described in U.S. Patents 4,756,973, 6,432,544B1 and 6,506,488; photochromic polysilane coatings, such as those described in U.S. Patent 4,556,605; photochromic poly(meth)acrylate coatings, such as those described in U.S. Patents 6,602,603, 6,150,430 and 6,025,026, and WIPO Publication WO 01/02449 A2; polyanhydride photochromic coatings, such as those described in U.S. Patent 6,436,525; photochromic polyacrylamide coatings such as those described in U.S. Patent 6,060,001; photochromic epoxy resin coatings, such as those described in U.S. Patents 4,756,973 and 6,268,055B1; and photochromic poly(urea-urethane) coatings, such as those described in U.S. Patent 6,531,076. The specifications of the aforementioned U.S. Patents and international publication are hereby specifically incorporated by reference herein.

As used herein the term "transitional coating" means a coating that aids in creating a gradient in properties between two coatings. For example, although not limiting herein, a transitional coating can aid in creating a gradient in hardness between a relatively hard coating and a relatively soft coating. Non-limiting examples of transitional coatings include radiation-cured acrylate-based thin films.

Non-limiting examples of additional protective coatings can include additional abrasion-resistant coatings comprising organo silanes, abrasion-resistant coatings comprising radiation-cured acrylate-based thin films, abrasion-resistant coatings based on inorganic materials such as silica, titania and/or zirconia, organic abrasion-resistant coatings of the type that are ultraviolet light curable, oxygen barrier-coatings, UV-shielding coatings, and combinations thereof. For example, according to one non-limiting embodiment, the protective coating can comprise a first coating of a radiation-cured acrylate-based thin film and a second coating comprising an organo silane. Non-limiting examples of commercial protective coatings products include SILVUE^{®} 124 and HI-GARD® coatings, available from SDC Coatings, Inc. and PPG Industries, Inc., respectively.

Illustrating the invention are the following examples, which, however, are not to be considered as limiting the invention to their details. Unless otherwise indicated, all parts and percentages in the following examples, as well as throughout the specification, are by weight.

### EXAMPLES

### Example 1

Diluted nitric acid solution was prepared by mixing 1.05 grams of 70% nitric acid with 7000.00 grams of DI water.

Glycidoxypropyltrimethoxysilane (1371.5 grams) and tetramethoxysilane (783.0 grams) were added to a clean reaction vessel equipped with a stirrer and were mixed. The contents of the reaction vessel were cooled with an ice/water bath. When the temperature of the silane mixture in the reaction vessel reached about 10°C, the pre-diluted nitric acid solution (676.5 grams) was added over a period of 30 minutes with vigorous stirring. The amount of pre-diluted nitric acid contained approximately the stoichiometric amount of water necessary to fully hydrolyze the silane. Increased temperature was observed as the result of an exothermal reaction. The ice/water bath kept the maximum reaction temperature between 30-35°C. After the maximum temperature was reached, the contents of the reaction vessel were cooled to and maintained at 20-25°C. and stirred for 3 hours. After this time, the pH of the mixture was adjusted to 5.5 by slowly adding a few drops of 25% tetramethylammonium hydroxide solution in methanol into the reaction vessel. To this was added with stirring Dowanol® PM acetate (557.0 grams), Dowanol® PM glycol ether (557 grams), BYK-306 (5.2 grams), and 51.0 grams of 50% triarylsulfonium hexafluorophosphate salts solution in propylene carbonate and the resulting mixture was stirred for 30 minutes. The resulting solution was filtered through a nominal 0.45 micron capsule filter and stored at 4°C until use. The solution of Example 1 had total solids of approximately 40%.

### Example 2

In a suitable vessel, acryloxypropyltrimethoxysilane (10 percent by weight on total solids) was added with mixing to the solution of Example 1 to produce the solution of Example 2.

### Example 3

In a suitable vessel, the product of Example 1 (2012 grams) was added. To this was added with stirring Dowanol® PM acetate (282.0 grams), Dowanol® PM glycol ether (282 grams). The resulting solution of Example 3 had total solids of approximately 30%.

### Example 4 (comparative)

Glycidoxypropyltrimethoxysilane (760.0 grams) was added to a clean reaction vessel equipped with a stirrer and placed in an ice/water bath. When the temperature of the silane in the reaction vessel reached about 20°C, the pre-diluted nitric acid solution (173.8 grams) was added with vigorous stirring. Increased temperature was observed as the result of an exothermal reaction. The ice/water bath kept the maximum reaction temperature between 30-35°C. After the maximum temperature was reached, the contents of the reaction vessel were cooled to and maintained at 20-25°C. and stirred for 3 hours. After this time, the pH of the mixture was adjusted to 5.5 by slowly adding a few drops of 25% tetramethylammonium hydroxide solution in methanol into the reaction vessel. To this was added with stirring Dowanol® PM acetate (525.0 grams), Dowanol® PM glycol ether (525 grams), BYK-306 (2.0 grams), and 20.0 grams of 50% triarylsulfonium hexafluorophosphate salts solution in propylene carbonate and the resulting mixture was stirred for 30 minutes. The resulting solution was filtered through a nominal 0.45 micron capsule filter and stored at 4°C until use. The solution of Example 4 had total solids of approximately 30%.

### Example 5

The solution of Example 3 (25 grams) and the solution of Example 4 (25 grams) were added to a suitable vessel and stirred for 30 minutes to produce the solution of Example 5.

### Example 6

Four uncoated lenses made of optical grade thermoplastic polycarbonate from Sola Optical USA and four of TRIVEX® lens material from PPG Industries, Inc. were washed with soapy water, rinsed with deionized water, rinsed with isopropyl alcohol and dried under a stream of nitrogen gas. The thermoplastic polycarbonate lenses were 65 mm in diameter and the lenses of TRIVEX® lens material were 78 mm in diameter.

Four uncoated lenses made of CR-39® monomer, available from PPG Industries, Inc., were cleaned with acetone; washed with soapy water; rinsed with deionized water; soaked in a 12.5 weight percent sodium hydroxide solution in an ultrasonic bath maintained at 50°C for 3 minutes; sequentially rinsed in two ultrasonic baths containing deionized water maintained at 50°C; rinsed with isopropyl alcohol; and dried in a convection oven maintained at 60°C. The lenses were 70 mm in diameter.

The uncoated lenses of thermoplastic polycarbonate were coated with a 10%, based on weight, solution of hexanediol diacrylate in Dowanol® PM glycol ether. While the lenses were spinning at 1,100 rpm, approximately 3 grams of the hexanediol diacrylate solution was dispensed from a pipet positioned over the center of the lens and moved to the edge for a time period of 3 to 5 seconds while dispensing. After the dispensing of solution was started, the lens was spun for a total of 11 second. The resulting coated lenses were cured in a Fusion UV Systems, Inc. while supported on a conveyor belt, at a speed of 3 feet per minute, beneath an ultraviolet "type D" lamp, each lens being exposed to a UVA dosage of about 2.5 to 5 Joules per cm². The ultraviolet dosage used to cure the coated lens was measured by a UV Power Puck™ electro-optic radiometer from Electronic Instrumentation and Technology, Inc. The lenses were then spin coated with the solution of Example 2 using the same coating procedure used for the solution of hexanediol diacrylate.

The uncoated lenses prepared of TRIVEX® lens material and CR-39® monomer were spin coated with the solution of Example 1 using the same coating procedure used for the solution of hexanediol diacrylate.

All of the lenses coated with the Example solutions were cured in a Fusion UV Systems, Inc. while supported on a conveyor belt, at a speed of 3 feet per minute, beneath an ultraviolet "type D" lamp, each lens was exposed to a UVA dosage of about 6 J/cm², as measured by the UV Power Puck™ electro-optic radiometer.

Two of each lens type were tested for Bayer abrasion resistance according to the Bayer Test - SOP# L-11-10-06 of the COLTS® Laboratories. The other two lenses of each type were tested for abrasion resistance in the Steel Wool Test according to the Steel Wool Abrasion - SOP# L-11-12-05 of the COLTS® Laboratories except that the results reported represent the difference in percent haze between the initial and final percent haze of the test lens. Both of the aforementioned test methods are incorporated herein by reference. A control or uncoated lens was included for each test. The test results are presented in Table 1.

**Table 1**

| | **Lens material** | **Bayer Test** | **Steel Wool Test** |
|---|---|---|---|
| Example 1 | CR-39® monomer | 4.05 | 0.03% |
| Control | CR-39® monomer | 1.00 | 2.5% |
| Example 1 | TRIVEX® lens material | 4.95 | 0.01% |
| Control | TRIVEX® lens material | 0.70 | 30.00% |
| Example 2 | Thermoplastic polycarbonate | 4.05 | 0.03% |
| Control | Thermoplastic polycarbonate | 0.76 | 3.84% |

The test results for the Bayer Abrasion Test listed in Table 1 for duplicate samples of each lens material were calculated by dividing the percent haze of an uncoated lens made of a homopolymer prepared from CR-39® monomer by the percent haze of the coated test lens. The resulting number is an indication of how much more abrasion resistant the coated test lens is as compared to the uncoated lens of CR-39® monomer. The results for the samples coated with Examples 1 and 2 showed a higher Bayer Abrasion result indicating a higher resistance to abrasion than the lens material of CR-39® monomer as well as the other uncoated lens material.

The test results for the Steel Wool Test reported for the samples coated with Examples 1 and 2 showed the development of a lower percent haze difference between the initial percent haze and final percent haze than the uncoated lens material.

In Table 2, the Bayer Test results as well as the Steel Wool Test results are reported for lenses made of CR-39® monomer coated using the same procedures described above except for the following: single rather than duplicate lenses were coated with Examples 3, 4 and 5; a single control (uncoated) lens was included; and a 6.8 pound (3.1 kg) weight was used instead of a 5.0 pound (2.3 kg) weight in the Steel Wool Test.

**Table 2**

| | **Lens material** | **Bayer Test** | **Steel Wool Test** |
|---|---|---|---|
| Control | CR-39® monomer | 1.00 | 0.89% |
| Example 3 | CR-39® monomer | 4.36 | 0.04% |
| Example 4* | CR-39® monomer | 2.50 | 0.07% |
| Example 5 | CR-39® monomer | 3.42 | 0.03% |

| | | | |
|---|---|---|---|
| *comparative | | | |

The test results for the Bayer Abrasion Test showed higher abrasion resistance for the samples coated with Examples 3, 4 and 5 and the development of a lower percent haze difference in the Steel Wool Test than the uncoated Control lens.

### Example 5

Two samples of 3 inch by 3 inch (7.62 cm by 7.62cm) film by 10 mils (254.0 microns) of each of the following materials were treated with oxygen plasma at a flow rate of 100 milliliters(mL) per minute of oxygen at 100 watts of power for one minute and then coated with the solution of Example 3: XYLEX® 7300CL (reported to be a polycarbonate/polycaprolactone from GE); TAC (reported to be a cellulose triacetate from LOFO); applied to the cellulose acetate butyrate film side of CAB K7874 (reported to be a cellulose acetate butyrate film laminated to a polyvinyl alcohol film from Kodak); and applied to the polyvinyl alcohol film side of CAB K7874. The solution of Example 3 was applied following the procedure described hereinbefore except that the films were spun for 9 seconds. The coated films were cured by exposure to ultraviolet radiation in an EYE Ultraviolet Conveyor line traveling 6 feet per minute (0.183 m per minute) beneath a 400 watt/inch gallium iodide mercury lamp. The first lamp of the Eye unit was turned off and the second one positioned 7.0 inches above the conveyor was set on High. The UVA ultraviolet dosage used to cure the coated film as measured by a UV Power Puck™ electro-optic radiometer was from 0.5 to 1.0 Joules/cm². For comparative purposes, a film of XYLEX® 7300CL without a further cured coating was included as Comparative Example 1.

The films coated with the solution of Example 3 and the films of Comparative Example (CE) 1 were tested for Bayer Abrasion Resistance and Steel Wool Abrasion according to the Colts Laboratories procedures described above as well as primary adhesion according to ASTM D-3359-93 Standard Test Method for Measuring Adhesion by Tape Test - Method B. The arithmetic average of results of testing on 2 films is reported in Table 3.

**Table 3**

| | Bayer Test | Steel Wool Test | Primary Adhesion |
|---|---|---|---|
| Example 3 coated onto CAB side of CAB K7874 | 4.9 | 0% | PASS |
| Example 3 coated onto PVA side of CAB K7874 | 3.4 | 0.2% | PASS |
| Example 3 coated onto TCA | 4.1 | 0.3% | PASS |
| Example 3 coated onto XYLEX® 7300CL | 5.3 | 0.04% | PASS |
| CE 1 - uncoated XYLEX® 7300CL | 0.8 | 2% | - |

Test results for XYLEX® 7300CL coated with the solution of Example 3 showed a higher level of Bayer Abrasion resistance and a lower percent change in haze than the uncoated film tested as Comparative Example (CE) 1. The other films coated with Example 3 also showed comparably high Bayer Abrasion Resistance and low Steel Wool Test results. Each of the coated films passed the primary adhesion testing which is equivalent to a rating of "5B" described in section 12.9 of ASTM D 3359-97.

It will be readily appreciated by those skilled in the art that modifications may be made to the invention without departing from the concepts disclosed in the foregoing description. Such modifications are to be considered as included within the following claims unless the claims, by their language, expressly state otherwise. Accordingly, the particular embodiments described in detail herein are illustrative only and are not limiting to the scope of the invention which is to be given the full breadth of the appended claims and any and all equivalents thereof.

## Claims

1. A coating composition comprising:
an alkoxide of the general formula RₓM(OR')_{z-x} where R is an organic radical, M is silicon, aluminum, titanium, and/or zirconium, each R' is independently an alkyl radical, z is the valence of M, and x is a number less than z and may be zero and optionally a catalyst;
wherein the coating composition is cationically curable and wherein the alkoxide comprises a glycidoxy[(C₁-C₃)alkyl]tri(C₁-C₄)alkoxysilane monomer and a tetra(C₁-C₆)alkoxysilane monomer.

2. The coating composition of claim 1, wherein the glycidoxy[(C₁-C₃)alkyl]-tri(C₁-C₄)alkoxysilane monomer comprises γ-glycidoxypropyltrimethoxysilane and the tetra(C₁-C₆)alkoxysilane monomer comprises tetramethoxysilane and/or tetraethoxysilane.

3. The coating composition of claim 1, wherein the catalyst is present and comprises an acidic material and/or a material that generates an acid upon exposure to actinic radiation and/or thermal energy.

4. The coating composition of claim 3, wherein the material that generates an acid upon exposure to actinic radiation comprises a cationic photoinitiator.

5. The coating composition of claim 1, further comprising a polyepoxy compound comprising a polyglycidyl ether group-containing compound and/or a polyglycidyl ester group-containing compound.

6. The coating composition of claim 5, wherein the polyepoxy compound comprises a diglycidyl ether of polyethylene glycol, polypropylene glycol, neopentylglycol, glycerol, trimethylolpropane, and/or bisphenol A.

7. The coating composition of claim 5, wherein the polyepoxy compound is present in an amount ranging from 9 to 50 weight percent based on total weight of resin solids.

8. The coating composition of claim 1, wherein the composition is substantially free of free radically polymerizable materials or free radical polymerization initiator.

9. A plastic substrate at least partially coated with a hard coat deposited from the coating composition of claim 1 or 5.

10. The plastic substrate of claim 9, wherein the substrate comprises polycarbonate, polyurethane, poly(urea)urethane, polythiourethane, polythio(urea)urethane, and/or polyol (allyl carbonate) materials.

11. The plastic substrate of claims 9, wherein the substrate comprises a film comprising cellulose acetate, cellulose diacetate, cellulose triacetate, cellulose acetate propionate, cellulose acetate butyrate, poly(vinyl acetate), poly(vinyl alcohol), poly(vinyl chloride), poly(vinylidene chloride), poly(ethylene terephthalate), polyester, polyurethane, polythioruethane, polycarbonate, copolymers thereof, and/or mixtures thereof.

12. The plastic substrate of claim 9, wherein the hard coat is deposited directly onto the substrate with no intervening primer layer therebetween.

13. A method for depositing a hard coat on at least a portion of a plastic substrate comprising:
(a) at least partially hydrolyzing an alkoxide of the general formula RₓM(OR')_{z-x} where R is an organic radical, M is silicon, aluminum, titanium, and/or zirconium, each R' is independently an alkyl radical, z is the valence of M, and x is a number less than z and may be zero and wherein the alkoxide comprises a glycidoxy[(C₁-C₃)alkyl]tri(C₁-C₄)alkoxysilane monomer and a tetra(C₁-C₆)alkoxysilane monomer; and
(b) depositing the coating composition on at least a portion of the substrate; and
(c) curing the coating composition, wherein the coating composition is cationically curable.

14. A method for improving the abrasion resistance of a plastic substrate comprising
(a) at least partially hydrolyzing an alkoxide of the general formula RₓM(OR')_{z-x} where R is an organic radical, M is silicon, aluminum, titanium, and/or zirconium, each R' is independently an alkyl radical, z is the valence of M, and x is a number less than z and may be zero and wherein the alkoxide comprises a glycidoxy[(C₁-C₃)alkyl]tri(C₁-C₄)alkoxysilane monomer and a tetra(C₁-C₆)alkoxysilane monomer; and
(b) depositing the coating composition on at least a portion of the substrate; and
(c) curing the coating composition to form a hard coat on at least a portion of the substrate, wherein the coating composition is cationically curable.

## Patentansprüche

1. Beschichtungszusammensetzung enthaltend:
ein Alkoxid der allgemeinen Formel RₓM(OR')_{z-x}, worin R ein organischer Rest ist, M gleich Silicium, Aluminium, Titan und/oder Zirconium ist, jedes R' unabhängig voneinander ein Alkylrest ist, z die Valenz von M ist und x eine Zahl kleiner als z ist, die null sein kann, und optional einen Katalysator,
wobei die Beschichtungszusammensetzung kationisch härtbar ist und das Alkoxid ein Glycidoxy[(C₁-C₃)alkyl]tri(C₁-C₄)alkoxysilanmonomer und ein Tetra(C₁-C₆)alkoxysilanmonomer umfasst.

2. Beschichtungszusammensetzung nach Anspruch 1, wobei das Glycidoxy[(C₁-C₃)alkyl]-tri(C₁-C₄)alkoxysilanmonomer γ-Glycidoxypropyltrimethoxysilan umfasst und das Tetra(C₁-C₆)alkoxysilanmonomer Tetramethoxysilan und/oder Tetraethoxysilan umfasst.

3. Beschichtungszusammensetzung nach Anspruch 1, wobei der Katalysator vorhanden ist und einen sauren Stoff und/oder einen Stoff, der eine Säure bei Bestrahlung mit aktinischer Strahlung und/oder durch thermische Energie erzeugt, enthält.

4. Beschichtungszusammensetzung nach Anspruch 3, wobei der Stoff, der eine Säure bei Bestrahlung mit aktinischer Strahlung erzeugt, einen kaktionischen Photoinitiator umfasst.

5. Beschichtungszusammensetzung nach Anspruch 1, die zusätzlich eine Polyepoxyverbindung enthält, die eine Polyglycidylethergruppen enthaltende Verbindung und/oder eine Polyglycidylestergruppen enthaltende Verbindung enthält.

6. Beschichtungszusammensetzung nach Anspruch 5, wobei die Polyepoxyverbindung einen Diglycidylether von Polyethylenglykol, Polypropylenglykol, Neopentylglykol, Glycerin, Trimethylolpropan und/oder Bisphenol A enthält

7. Beschichtungszusammensetzung nach Anspruch 5, wobei die Polyepoxyverbindung in einer Menge im Bereich von 9 bis 50 Gew.-%, bezogen auf das Gesamtgewicht der Harzfeststoffe, vorhanden ist.

8. Beschichtungszusammensetzung nach Anspruch 1, wobei die Zusammensetzung im wesentlichen frei von radikalisch polymerisierbaren Stoffen oder radikalischem Polymerisationsinitiator ist.

9. Kunststoffsubstrat, das wenigstens teilweise mit einer harten Beschichtung, die aus der Beschichtungszusammensetzung des Anspruchs 1 oder 5 abgeschieden ist, beschichtet ist.

10. Kunststoffsubstrat nach Anspruch 9, wobei das Substrat Polycarbonat-, Polyurethan-, Poly(harnstoff)urethan-, Polythiourethan-, Polythio(harnstoff)urethan- und/oder Polyol(allylcarbonat)materialien enthält.

11. Kunststoffsubstrat nach Anspruch 9, wobei das Substrat einen Film aufweist, der Celluloseacetat, Cellulosediacetat, Cellulosetriacetat, Celluloseacetatpropionat, Celluloseacetatbutyrat, Poly(vinylacetat), Poly(vinylalkohol), Poly(vinylchlorid), Poly(vinylidenchlorid), Poly(ethylenterephthalat), Polyester, Polyurethan, Polythiourethan, Polycarbonat, Copolymere davon und/oder Mischungen davon enthält.

12. Kunststoffsubstrat nach Anspruch 9, wobei die harte Beschichtung direkt auf das Substrat ohne vermittelnde Primerschicht dazwischen abgeschieden ist.

13. Verfahren zur Abscheidung einer harten Beschichtung auf wenigstens einem Teil eines Kunststoffsubstrats, umfassend:
(a) zumindest teilweises Hydrolysieren eines Alkoxids der allgemeinen Formel RₓM(OR')_{z-x}, worin R ein organischer Rest ist, M gleich Silicium, Aluminium, Titan und/oder Zirconium ist, jedes R' unabhängig voneinander ein Alkylrest ist, z die Valenz von M ist und x eine Zahl kleiner als z ist, die null sein kann, und wobei das Alkoxid ein Glycidoxy[(C₁-C₃)alkyl]tri(C₁-C₄)alkoxysilanmonomer und ein Tetra(C₁-C₆)alkoxysilanmonomer umfasst, und
(b) Aufbringen der Beschichtungszusammensetzung auf wenigstens einem Teil des Substrats und
(c) Härten der Beschichtungszusammensetzung, wobei die Beschichtungszusammensetzung kationisch härtbar ist.

14. Verfahren zur Verbesserung der Abriebbeständigkeit eines Kunststoffsubstrats, umfassend:
(a) zumindest teilweises Hydrolysieren eines Alkoxids der allgemeinen Formen RₓM(OR')_{z-x}, worin R ein organischer Rest ist, M gleich Silicium, Aluminium, Titan und/oder Zirconium ist, jedes R' unabhängig voneinander ein Alkylrest ist, z die Valenz von M ist und x eine Zahl kleiner als z ist, die null sein kann, und wobei das Alkoxid ein Glycidoxy[(C₁-C₃)alkyl]tri(C₁-C₄)alkoxysilanmonomer und ein Tetra(C₁-C₆)alkoxysilanmonomer umfasst, und
(b) Aufbringen der Beschichtungszusammensetzung auf wenigstens einem Teil des Substrats und
(c) Härten der Beschichtungszusammensetzung, um eine harte Beschichtung auf wenigstens einem Teil des Substrats auszubilden, wobei die Beschichtungszusammensetzung kationisch härtbar ist.

## Revendications

1. Composition de revêtement comprenant :
un alcoxyde de formule générale RₓM(OR')_{z-x} où R est un radical organique, M est le silicium, l'aluminium, le titane et/ou le zirconium, chaque R' est indépendamment un radical alkyle, z est la valence de M, et x est un nombre inférieur à z et peut valoir zéro, et facultativement un catalyseur ;
où la composition de revêtement est cationiquement vulcanisable et où l'alcoxyde comprend un monomère de glycidoxy[alkyle (en C₁ à C₃)]trialcoxy (en C₁ à C₄)silane et un monomère de tétraalcoxy (en C₁ à C₆)silane.

2. Composition de revêtement selon la revendication 1, dans laquelle le monomère de glycidoxy[alkyle (en C₁ à C₃)]trialcoxy (en C₁ à C₄)silane comprend le γ-glycidoxypropyl-triméthoxysilane et le monomère de tétraalcoxy (en C₁ à C₆)silane comprend le tétraméthoxysilane et/ou le tétraéthoxysilane.

3. Composition de revêtement selon la revendication 1, dans laquelle le catalyseur est présent et comprend un matériau acide et/ou un matériau qui génère un acide lors d'une exposition à un rayonnement actinique et/ou de l'énergie thermique.

4. Composition de revêtement selon la revendication 3, dans laquelle le matériau qui génère un acide lors d'une exposition à un rayonnement actinique comprend un photoinitiateur cationique.

5. Composition de revêtement selon la revendication 1, comprenant en outre un composé poly(époxyde) comprenant un composé contenant un groupe poly(glycidyléther) et/ou un composé contenant un groupe poly(glycidylester).

6. Composition de revêtement selon la revendication 5, dans laquelle le composé poly(époxyde) comprend un diglycidyléther de poly(éthylène glycol), poly(propyléne glycol), néopentylglycol, glycérol, triméthylolpropane et/ou le bisphénol A.

7. Composition de revêtement selon la revendication 5, dans laquelle le composé poly(époxyde) est présent dans une gamme variant de 9 à 50 pour cent en poids par rapport au poids total de la matière solide de résine.

8. Composition de revêtement selon la revendication 1, dans laquelle la composition est sensiblement dépourvue de matériaux polymérisables par radicaux libres ou d'initiateurs de polymérisation par radicaux libres.

9. Substrat plastique au moins partiellement revêtu avec une couche dure déposée à partir de la composition de revêtement de la revendication 1 ou 5.

10. Substrat plastique selon la revendication 9, dans lequel le substrat comprend les matériaux poly(carbonate), poly(uréthane), poly(urée) (uréthane), poly(thiouréthane), poly(thio(urée)uréthane) et/ou polyol (carbonate d'allyle).

11. Substrat plastique selon la revendication 9, dans lequel le substrat comprend un film comprenant l'acétate de cellulose, le diacétate de cellulose, le triacétate de cellulose, l'acétate propionate de cellulose, l'acétate butyrate de cellulose, le poly(acétate de vinyle), le poly(alcool vinylique), le poly(chlorure de vinyle), le poly(chlorure de vinylidène), le poly(téréphtalate d'éthylène), le poly(ester), le poly(uréthane), le poly(thiouréthane), le poly(carbonate), leurs copolymères et/ou leurs mélanges.

12. Substrat plastique selon la revendication 9, dans lequel la couche dure est déposée directement sur le substrat sans couche d'apprêt intervenante entre eux.

13. Procédé de dépôt d'une couche dure sur au moins une partie d'un substrat plastique comprenant les étapes consistant à :
(a) hydrolyser au moins partiellement un alcoxyde de formule générale RₓM(OR')_{z-x} où R est un radical organique, M est le silicium, l'aluminium, le titane et/ou le zirconium, chaque R' est indépendamment un radical alkyle, z est la valence de M, et x est un nombre inférieur à z et peut valoir zéro, et où l'alcoxyde comprend un monomère de glycidoxy[alkyle (en C₁ à C₃)]trialcoxy (en C₁ à C₄)silane et un monomère de tétraalcoxy (en C₁ à C₆)silane ; et
(b) déposer la composition de revêtement sur au moins une partie du substrat ; et
(c) vulcaniser la composition de revêtement, où la composition de revêtement est cationiquement vulcanisable.

14. Procédé d'amélioration de la résistance à l'abrasion d'un substrat plastique, comprenant les étapes consistant à
(a) hydrolyser au moins partiellement un alcoxyde de formule générale RₓM(OR')_{z-x} où R est un radical organique, M est le silicium, l'aluminium, le titane et/ou le zirconium, chaque R' est indépendamment un radical alkyle, z est la valence de M, et x est un nombre inférieur à z et peut valoir zéro, et où l'alcoxyde comprend un monomère de glycidoxy[alkyle (en C₁ à C₃)]trialcoxy (en C₁ à C₄)silane et un monomère de tétraalcoxy (en C₁ à C₆)silane ; et
(b) déposer la composition de revêtement sur au moins une partie du substrat ; et
(c) vulcaniser la composition de revêtement pour former une couche dure sur au moins une partie du substrat, où la composition de revêtement est cationiquement vulcanisable.
